# EUROPÄISCHE PATENTSCHRIFT

(11) **EP 2 475 489 B1**
(45) Veröffentlichungstag und Bekanntmachung des Hinweises auf die Patenterteilung: **25.02.2015**
(21) Anmeldenummer: 10774114.2
(22) Anmeldetag: 13.09.2010
(51) Int. Cl.: B23K 9/095

(54) **ÜBERWACHUNGSMODUL ZUR ÜBERWACHUNG EINES PROZESSES MIT EINEM LICHTBOGEN**
ÜBERWACHUNGSMODUL ZUR ÜBERWACHUNG EINES PROZESSES MIT EINEM LICHTBOGEN
MODULE DE SURVEILLANCE POUR SURVEILLANCE D'UN PROCESSUS DE TRAITEMENT À L'ARC

(30) Priorität: 11.09.2009 AT 14482009
(43) Veröffentlichungstag der Anmeldung: 18.07.2012
(73) Patentinhaber: Fronius International GmbH, 4643 Pettenbach (AT)
(72) Erfinder: HÖRTENHUBER, Martin, 4653 Eberstalzell (AT); REINTHALER, Günther, 4715 Taufkirchen/Trattnach (AT)
(74) Vertreter: Burger, Hannes
(86) Internationale Anmeldenummer: PCT/AT2010/000330
(87) Internationale Veröffentlichungsnummer: WO 2011/029118

(56) Entgegenhaltungen:
- WO-A1-98/22850
- WO-A1-2007/098609
- WO-A1-2009/018391
- DE-A1-102004 039 410
- GB-A- 2 325 107
- US-A- 4 471 207
- US-A- 4 764 655
- US-A1- 2008 310 140

## Beschreibung

Die Erfindung betrifft ein Überwachungsmodul zur Überwachung eines Prozesses mit einem Lichtbogen, wobei der Lichtbogen mit einem Brenner geführt ist, umfassend eine Kamera, eine Blitzlampe und eine Steuerung, welche die Blitzlampe derart ansteuert, dass sie zur Zeit der Aufnahme eines Bildes durch die Kamera leuchtet, wobei die genannten Komponenten (Kamera, Blitzlampe, Steuerung) in einem gemeinsamen Gehäuse angeordnet sind.

Schon seit einiger Zeit werden Prozesse mit einem Lichtbogen wie z.B. Schweißvorgänge elektronisch überwacht, um Fehler im Prozeßablauf frühzeitig erkennen zu können und um gegebenenfalls korrigierend eingreifen zu können. Beispielsweise wird dazu das Schweißbad beobachtet oder auch die Schallentwicklung während des Schweißvorgangs ausgewertet, um daraus Rückschlüsse auf die Qualität des Schweißvorgangs ziehen zu können. Aus dem Stand der Technik sind dazu bereits einige Möglichkeiten bekannt.

Beispielsweise zeigt die JP 6304754 A dazu eine Vorrichtung zur Beobachtung eines Schweißbades, welche aus einer Kamera und einer Stroboskoplampe besteht Die Lampe wird dabei so mit der Kamera synchronisiert, dass sie dann Licht emittiert, wenn die Kamera ein Bild (einen "Frame") erfasst. Durch die Stroboskoplampe wird die Umgebung der Schweißstelle so ausgeleuchtet, dass diese in etwa dieselbe Helligkeit aufweist wie der Lichtbogen des Lichtbogenschweißgeräts.

Ein weiteres, ähnliches Beispiel ist die WO 1996/013354 A1, welche ebenfalls eine Kamera zur Beobachtung sowie eine Stroboskoplampe zur Ausleuchtung des Schmelzbades während des Schweißvorgangs offenbart.

Die EP 1 769 880 A1 zeigt weiterhin eine Anordnung bestehend aus Kamera und Blitzlampe zur Beobachtung einer Schweißstelle, bei der die Kamera und die Blitzlampe an verschiedenen Positionen relativ zur Schweißstelle angeordnet und unter verschiedenen Winkeln zu dieser ausgerichtet sind, um die Bildung von Schatten zu vermeiden.

Weiterhin offenbart die DE 33 33 151 A1 eine Vorrichtung und ein Verfahren, bei der/dem auf eine Schweiß- oder Trennstelle orientierte Schallaufnehmer angeordnet sind und das Schweißgeräusch in einer Steuervorrichtung fortlaufend spektral analysiert wird. Dieses wird auf charakteristische, auf bestimmte Prozessparameter sensitive Größen ausgewertet und der Regelung der Versorgungsvorrichtung zugeführt Dabei wird die Gaszufuhr, die Dosierung des Schweißzusatzes, der Vorschub der Elektrode und/oder die Positionierung der Pistole zum Werkstück geregelt. Die Auswertung wird ergänzt durch zeitliche und räumliche Korrelation der Schallmessungen bzw. der spektralen Messwerte zu Prozessparametem z. B. Strom, Spannung, Positionierung.

Außerdem zeigt die GB 2325107 A eine Vorrichtung, bei der ein Laser eine erste Referenzmarke auf ein zu schweißendes Werkstück projiziert. Eine Videokamera nimmt diese erste Referenzmarke sowie eine Umgebung dieser Referenzmarke auf und blendet eine zweite Referenzmarke in das Bild ein. Während des Schweißvorgangs wird eine Schweißpistole so eingestellt, dass sich die erste und die zweite Referenzmarke decken.

Zudem offenbart die DE 10 2004 039 410 A1 ein Verfahren und eine Vorrichtung zur Regelung eines automatischen Bearbeitungsprozesses. Dabei wird mittels einer Lichtquelle und einer ersten zwischen der Lichtquelle und einem zu bearbeitenden Werkstück angeordneten Optik eine Lichtlinie auf einen mittels eines Bearbeitungskopfes bearbeiteten Bereich des Werkstücks projiziert. Weiterhin wird die Lichtlinie von einer zweiten Optik auf eine Empfängeranordnung abgebildet und mittels einer Auswerteschaltung wenigstens ein Bearbeitungsparameter einer Bearbeitungsmaschine in Abhängigkeit vom Vergleich eines Ist-Wertes eines aus dem Profilverlauf ermittelten Parameters mit seinem Soll-Wert geregelt.

Ferner offenbart die US 4,471,207 ein Lichtbogenschweißsystem, bei dem der Schweißprozess mit Hilfe eines Tons überwacht werden kann, der entsprechend der Schweißspannung und des Schweitlstroms moduliert wird. Konkret wird die Lautstärke des Tons entsprechend dem Schweißstrom und die Frequenz des Tons entsprechend der Schweißspannung verändert.

Außerdem zeigt die US 4,764,655 eine Laserbearbeitungsmaschine, bei dem ein Brennfleck eines Laserstrahls auf einem Werkstück mit Hilfe einer Videokamera beobachtet wird. Auf Basis des erfassten Bildes wird der Durchmesser des Laserstrahls ermittelt.

Schließlich zeigt die WO 2007/098609 A1 eine Kamera, dessen Gehäuse mit einem Druckluftanschluss ausgerüstet ist. Die zugeführte Luft dient dabei der Kühlung und der Reinigung. Um die Linse der Kamera sauber zu halten, wird die Druckluft durch eine im Kameragehäuse im Bereich der Linse angeordnete Austrittsöffuung geführt. Dadurch entsteht eine von der Linse wegweisende und in der optischen Achse der Kamera ausgerichtete Luftströmung.

Darüber hinaus zeigt die US 2008/0310140 A1 allgemein einen Diffusor für eine Blitzlampe eines Fotoapparats.

Weiterhin offenbart die WO 98/22850 eine Filteranordnung für einen Fotoapparat mit einem Rahmen, einen in den Rahmen eingesetzten Filter sowie einen Fixierring zum Fixieren des Filters im Rahmen.

Schließlich offenbart die WO 2009/018391 A1 allgemein eine Videokamera, bei dem die Bildebene eines Bildsensors gegenüber dem Kameragehäuse gedreht werden kann.

Nachteilig an den bekannten Methoden ist, dass sie proprietär sind, das heißt für den jeweiligen Maschinentyp und den jeweiligen speziellen Anwendungszweck ausgelegt sind. Zudem sind diese Lösungen aufgrund der geringen Stückzahlen vergleichsweise teuer und schlecht zu warten. Ebenso sind die eingeschränkte Zugänglichkeit, der erhöhte Platzbedarf und der verbesserungswürdige Schutz gegen die erhöhten Schmutzeinwirkungen des Prozesses wie Rauch und Spritzer von Nachteil. Aus diesen Gründen erhöht sich auch der Wartungsaufwand.

Aufgabe der Erfindung ist es daher, ein Überwachungsmodul zur Überwachung des Ergebnisses zumindest eines Bearbeitungsprozesses mit zumindest einem Lichtbogen zu schaffen, insbesondere eines, welches im Wesentlichen eine Einheit mit einem Brenner bildet.

Die Aufgabe der Erfindung wird mit einem Überwachungsmodul nach dem Patentanspruch 1 gelöst, nämlich einem Überwachungsmodul der eingangs genannten Art,
- bei dem das Gehäuse einen Druckluftanschluss umfasst sowie einen Luftauslass oder eine am Gehäuse angeordnete Umlenkvorrichtung, welcher oder welche zur Ausrichtung des austretenden Luftstrahls quer zur optischen Achse der Kamera vorgesehen ist (also einen sogenannten Crossjet erzeugt), und
- bei dem eine durch die Druckluft verursachte Luftströmung über die Lichtquelle und/oder die Steuerung und/oder eine Ladeschaltung für die Lichtquelle geführt ist.

Auf diese Weise kann eine (zumeist in einer Produktionshalle ohnehin vorhandene) Druckluftversorgung genützt werden, um die optischen Komponenten des Überwachungsmoduls frei von Schmauch, Rauch und Ablagerungen zu halten, welche durch einen Prozess wie den Schweißvorgang hervorgerufen werden. Vorteilhaft umfasst das Überwachungsmodul auch einen Luftfilter, um Verschmutzungen im Überwachungsmodul vermeiden zu können. Insbesondere bewirkt der Luftfilter, dass die Reinigungswirkung der Schutzgläser bzw. Abdeckungen nicht beeinträchtigt wird, indem die Abdeckungen mit der Druckluft verschmutzt werden.

Dadurch, dass im Strömungsverlauf der Luft elektronische und/oder elektrische Komponenten angeordnet sind, kann die Druckluft zur Kühlung derselben eingesetzt werden und somit auf synergetische Weise einen Doppelnutzen erfüllen. Insbesondere kann eine Ladeschaltung für die Blitzlampe gekühlt werden, die sich wegen der hohen erforderlichen Lichtleistung beträchtlich erwärmt. Selbstverständlich kann aber auch ein Wasserkühlkreislauf für die Kühlung der genannten Komponenten vorgesehen werden.

Erfindungsgemäß wird so ein universelles Überwachungsmodul für die Überwachung der Ergebnisse eines laufenden Bearbeitungsprozesses mit einem Lichtbogen - also eine Online-Überwachung - geschaffen, das für viele Maschinentypen und Anwendungszwecke eingesetzt werden kann. Insbesondere können durch die Erfindung auch bestehende Brenner mit einem Überwachungsmodul nachgerüstet werden. Darüber hinaus werden die Kamera, die Lichtquelle und die Steuerung optimal vor den schädlichen Umwelteinflüssen in der näheren Umgebung einer Bearbeitungsstelle und Störungen einer Bearbeitungsstelle geschützt, wodurch in vorteilhafter Weise der Wartungsaufwand reduziert wird. Das Gehäuse kann dabei beispielsweise aus Metall und/oder Kunststoff bestehen. Durch Befestigung am Brenner bzw. nahe am Roboterflansch (Befestigungsvorrichtung) ist unabhängig von den Bewegungen des Brenners immer das mit dem Lichtbogen erzielte Ergebnis bzw. die Auswirkungen des Lichtbogens auf das Werkstück im Blick der Kamera, wie der Entstehungsprozess der Schweißnaht - also Schmelzbad, erstarrende und fertige Naht. Des Weiteren können die Versorgungsleitungen für das Überwachungsmodul im Wesentlichen in einem Schlauchpaket für den Brenner geführt werden, sodass die Versorgungsleitungen keine Einschränkungen der Bewegungsfreiheit darstellen. Ebenso kann die Kamera durch zumindest einen Teil des Brenners, wie einer Gasdüse, vor der Strahlung des Lichtbogens und Spritzer des Prozesses geschützt werden.

Als Lichtquelle können beispielsweise eine Xenon-Blitzlampe, ein Stroboskop oder aber auch Hochleistungs-LEDs eingesetzt werden, die von der Steuerung entsprechend getaktet werden. Die Leuchtdauer liegt beispielsweise im Bereich von 1 ms gefolgt von einer Leuchtpause beispielsweise im Bereich von 100 ms. Die benötigte Hochspannung für die Blitzlampe (ca. 600 VDC) wird vorteilhaft in einem externen Netzteil erzeugt. Mit dieser Spannung werden die Kondensatoren der Ladeschaltung für die Blitzlampe geladen. Vorteilhaft wird die Ladeschaltung mit so genannten impulsfesten Kondensatoren in unmittelbarer Nähe der Blitzlampe angeordnet, damit die zum Teil sehr hohen Ströme (etwa 3000 A durch im Wesentlichen einen Kurzschluss bei der Entladung) keinen allzu hohen Spannungsabfall auf ihrem Weg verursachen, beziehungsweise dicke Versorgungsleitungen kurz gehalten werden können. Weiterhin können so Störungen anderer elektrischer Leitungen im Bereich des Überwachungsmoduls vermieden werden, d.h. die EMV-Belastung der Umgebung des Überwachungsmoduls kann gering gehalten werden. Vorteilhaft kann auch ein Lichtwellenleiter dazu genutzt werden, das Licht von der Blitzlampe an eine beliebige Stelle zu leiten.

Als Kamera kann beispielsweise eine CMOS-Kamera oder eine CCD-Kamera, bevorzugt in digitaler Ausführung, eingesetzt werden. Weiterhin kommen Kameras für bewegte Bilder und/oder still stehende Bilder für die Erfindung in Betracht. Besonders vorteilhaft ist es, wenn die Kamera beziehungsweise das Überwachungsmodul über einen Datenbus wie eine USB-Schnittstelle verfügt und die Bilddaten somit durch serielle Datenübertragung an einen beliebigen Ort übermittelt werden können. Selbstverständlich können die Daten aber auch mit Hilfe eines anderen Protokolls übermittelt werden, insbesondere können die Daten auch über ein Glasfaserkabel transferiert werden.

In einer vorteilhaften Variante ist der Kamera ein (optischer) Filter vorgeschaltet, welcher Licht störender Wellenlängen des Lichtbogens eliminiert oder zumindest abschwächt. Diese Filter kommen insbesondere dann in Betracht, wenn LEDs als Lichtquelle benutzt werden. Dabei wird vorteilhaft ein Bandpass-Filter eingesetzt, der auf die Wellenlänge der LEDs sowie des Lichtbogens abgestimmt ist. Diese liegt im Wesentlichen im Bereich von 600 nm bis 650 nm.

Mit Hilfe der Kamera ist eine vorlaufende, nachlaufende sowie auch eine seitliche Beobachtung der Schweißnaht, dem Schweißspalt, dem Schmelzbad, usw. möglich. Es können auch zwei oder mehr Kameras beziehungsweise Überwachungsmodule gleichzeitig für eine lückenlose Überwachung des Schweißprozesses eingesetzt werden.

In einer Variante werden die vom Prozess mit dem Lichtbogen wie einem Schweißprozess aufgenommenen Bilder an einen Leitstand mit einer Auswerteeinheit übertragen. Mittels digitaler Datenübertragung kann ein Operator so den in einer automatisierten Schweißzelle ablaufenden Schweißprozess optisch und akustisch verfolgen ohne diese betreten zu müssen. Dadurch kann der Schweißvorgang auch bei sehr unwirtlicher Schweißumgebung oder eingeschränkter Zugänglichkeit des Schweißplatzes im Wesentlichen live beobachtet werden. Über mathematische Algorithmen können die Bildinformationen des Schweißprozesses analysiert und ausgewertet werden, wodurch Aussagen zur Qualität der Schweißung getroffen werden können. Durch die Echtzeitüberwachung ergibt sich auch der Vorteil, dass Abweichungen und Fehler schon während dem Schweißvorgang erkannt werden können und somit nach dem Fertigstellen einer Schweißnaht eine Nachbearbeitung oder bei nicht nachbearbeitbaren Teilen, eine Ausscheidung aus dem weiteren Fertigungsprozess erfolgen kann.

In einer Variante der Erfindung werden in einem aus Einzelaufnahmen zusammengefügten Gesamtbild des Ergebnisses des Prozesses, beispielsweise einer Schweißnaht, diverse Werte (z.B. Nahtbreite, Strom, Spannung, usw.) an einer bestimmten Position angezeigt, wobei die Werte entsprechend zu den Einzelaufnahmen abgespeichert und/oder ermittelt wurden. Auch können erkannte Fehler eingezeichnet werden. In einer weiteren Variante wird ein Nahtsuch- bzw. Nahtverfolgungssystem realisiert. Dabei wird die aktuelle Schweißposition über die Bildinformation bestimmt und die Höheninformation (Abstand Schweißbrenner zu Bauteil) aus dem Spannungs-Strom-Signal der Schweißstromquelle ermittelt. Dadurch können Abweichungen im Schweißvorgang, beispielsweise bedingt durch Bauteiltoleranzen oder inkorrekte Fixierung des Bauteils, ausgeglichen werden.

Wird das Überwachungsmodul mit einer Stromquelle für den Lichtbogen, wie z.B. einer Schweißstromquelle verknüpft, so können neben den Bilddaten zusätzliche Informationen, wie Schweißstroms, Schweißspannung und Drahtvorschub usw. in die Beurteilung der Schweißqualität einfließen. Die Beurteilung der Schweißung erfolgt einerseits durch Vergleich mit gespeicherten und als gut definierten Referenzen, andererseits durch Abweichungen von Sollwerten bzw. durch Überschreiten von einstellbaren Schwellwerten. Somit wird eine echtzeitfähige ProzessOberwachung und der direkte Eingriff auf die Schweißparameter während der Schweißung ermöglicht, um erkannten Abweichungen entgegen wirken zu können.

In einer weiteren vorteilhaften Variante wird das Überwachungsmodul auch mit einer Roboter-Steuerung verknüpft, sofern die Stromquelle bzw. der Brenner der Stromquelle an einem Roboter montiert ist. Auf diese Weise kann noch größerer Einfluss auf einen Prozess wie den Schweißvorgang genommen werden.

Vorteilhaft ist es, wenn die Kamera und die Lichtquelle in Richtung Lichtbogen ausgerichtet sind, wobei deren Ausrichtung an den Abstand zwischen Lichtbogen und Gehäuse angepasst ist, sofern die optische Achse der Kamera und die optische Achse der Lichtquelle zueinander winkelig angeordnet sind. Auf diese Weise kann die unmittelbare Umgebung der Bearbeitungsstelle beobachtet werden. Dabei ist es besonders vorteilhaft, wenn - vorausgesetzt die optischen Achsen der Kamera und der Lichtquelle sind nicht parallel - die Lichtquelle und die Kamera so ausgerichtet sind, dass sich der Schnittpunkt der genannten Achsen im Bereich der Bearbeitungsstelle befindet. Auf diese Weise kann die für die Lichtquelle eingesetzte Energie besonders gut genützt werden.

Günstig ist es, wenn das Gehäuse zur Befestigung am Brenner ausgebildet ist Auf diese Weise entsteht eine besonders kompakte Einheit

Vorteilhaft ist es, wenn die Druckluft zumindest in einem Kühlkanal und einem Reinigungskanal geführt ist, wobei zumindest ein Ende eines Reinigungskanals als ein Luftauslass ausgebildet ist. Auf diese Weise kann die Druckluft gezielt an zu kühlende Elemente und anschließend über einen Reinigungskanal ins Freie geleitet werden. Auf diese Weise kann die Druckluft zielgerichteter eingesetzt werden. Beispielsweise kann ein Kühlkanal durch einen Sockel der Lichtquelle geführt werden.

Vorteilhaft ist es auch, wenn der Druckluftanschluss mit dem Kühlkanal verbunden ist und der Kühlkanal zur Versorgung des Reinigungskanals und zumindest des Bereichs um die Steuerung ausgebildet ist. Auf diese Weise versorgt der Kühlkanal einen Reinigungskanal mit Luft aber auch einen Bereich um die Steuerung. Auf diese Weise können die beiden Einsatzzwecke der Druckluft, nämlich Kühlung und Reinigung, besser aufeinander abgestimmt werden.

Günstig ist es, wenn das Gehäuse eine transparente Abdeckung für die Kamera und die Blitzlampe umfasst. Auf diese Weise können die genannten Komponenten optimal vor den schädlichen Umwelteinflüssen in der Nähe einer Schweißstelle geschützt werden, wobei die Qualität der Bilderfassung aufrecht erhalten bleibt.

Vorteilhaft ist es, wenn das Gehäuse eine lösbare Abdeckung für die Kamera und die Lichtquelle umfasst, welche zumindest teilweise transparent und als Luftauslass ausgebildet ist. Auf diese Weise erfüllt die Abdeckung einen Doppelnutzen, nämlich schützt sie Kamera und Lichtquelle und sorgt gleichzeitig für seine Reinigung. Dadurch, dass die Abdeckung lösbar ausgestaltet ist, kann sie leicht gewechselt werden.

Günstig ist es dabei, wenn die transparente Abdeckung aus Kunststoff besteht. Auf diese Weise kann die Abdeckung kostengünstig hergestellt werden und ist deswegen auch gut als Verbrauchs- oder Verschleißteil geeignet. Durch Wechseln der transparenten Abdeckung können somit stets optimale Verhältnisse für Kamera und Lichtquelle geschaffen werden. In einfacher Weise erfolgt der Wechsel von außen, sodass das Gehäuse nicht geöffnet werden muss.

Besonders vorteilhaft ist es dabei, wenn in der transparenten Abdeckung ein Diffusor für die Lichtquelle integriert ist. Ein Diffusor kann die Bildung harter Schatten, welche ohne weitere Maßnahmen insbesondere bei Verwendung einer Blitzlampe verursacht werden, verhindern oder zumindest mildern. Insbesondere, wenn die transparente Abdeckung als Spritzgussteil hergestellt wird, ist dieser Diffusor leicht herzustellen.

Vorteilhaft ist es auch, wenn in dem Überwachungsmodul beziehungsweise in dem Gehäuse zusätzlich ein Mikrofon angeordnet ist. Mit Hilfe des Mikrofons kann ein Bearbeitungsprozess wie der Schweißprozess akustisch überwacht werden. Wenn Anomalitäten in dem von der Schweißstelle emittierten Geräusch erkannt werden, können beispielsweise ein Alarm ausgelöst oder Parameter des Schweißprozesses angepasst werden.

Günstig ist es dabei, wenn das Mikrofon im Wesentlichen - wie die Kamera - in Richtung des Lichtbogens ausgerichtet ist. Auf diese Weise kann sichergestellt werden, dass Umgebungsgeräusche nicht zu großen Einfluss auf die Auswertung des Schweißgeräusches haben. Insbesondere können auch Richtmikrofone für diesen Zweck eingesetzt werden.

Vorteilhaft ist es, wenn die Steuerung einen Eingang für ein Signal von einer Stromquelle für den Lichtbogen umfasst und der Bilderfassungsvorgang mit dem Signal steuerbar ist. Auf diese Weise können Informationen der Stromquelle oder Informationen, die aus dem Strom für den Lichtbogen erhalten werden können, für den Bilderfassungsvorgang nutzbar gemacht werden. Der Bilderfassungsvorgang kann somit besonders gut mit dem Bearbeitungsvorgang abgestimmt werden.

Vorteilhaft ist es dabei, wenn die Steuerung zum Anhalten des Bilderfassungsvorgangs vorgesehen ist, wenn die genannte Stromquelle eine Unterbrechung oder das Ende des Bearbeitungsvorgangs signalisiert. Auf diese Weise wird verhindert, dass ein Bildspeicher - sofern ein solcher vorhanden ist - nicht mit nutzlosen Daten befüllt wird. Andernfalls könnte, beispielsweise bei einem Maschinendefekt, für lange Zeit eine unveränderte Schweißstelle aufgezeichnet werden.

Vorteilhaft ist es, wenn die Steuerung einen Eingang für ein Signal von einer Stromquelle für den Lichtbogen umfasst und die Leistung der Lichtquelle mit dem Signal regelbar ist. Auf diese Weise können Informationen der Stromquelle oder Informationen, die aus dem Strom für den Lichtbogen erhalten werden können, für die Regelung der Lichtquelle nutzbar gemacht werden. Der Leistung der Lichtquelle kann somit besonders gut mit dem Bearbeitungsvorgang abgestimmt werden.

Besonders vorteilhaft ist es dabei, wenn die Steuerung zur Reduktion der Leistung der Lichtquelle vorgesehen ist, wenn die genannte Stromquelle einen Kurzschluss an der Bearbeitungsstelle oder einen starken Rückgang des Bearbeitungsstroms signalisiert. Da bei einem Kurzschluss kein Lichtbogen vorhanden ist, welcher das Bild überstrahlen würde, oder bei einem Rückgang des Schweißstroms eben nur ein geringer Einfluss von diesem ausgeht, kann ein Bild mit reduzierter Lichtleistung der Blitzlampe aufgenommen werden. Die erforderliche Lichtleistung richtet sich dabei im Wesentlichen an der Stärke des Umgebungslichts bzw. dem Licht des glühenden Schmelzbads, sowie an der gewünschten Verschluss- oder Belichtungszeit.

Vorteilhaft ist es, wenn das Überwachungsmodul:
- einen lichtempfindlichen Sensor umfasst, welcher im Wesentlichen zum Lichtbogen ausgerichtet ist, und
- die Steuerung einen Eingang für das Signal des lichtempfindlichen Sensors umfasst, sodass die Leistung der Lichtquelle in Abhängigkeit eines Signals des lichtempfindlichen Sensors steuerbar ist.

Anstelle des Eingangs von der Schweißstromquelle oder zusätzlich dazu kann zu demselben Zweck ein lichtempfindlicher Sensor vorgesehen sein, welcher mit der Steuerung verbunden ist. Anstatt Informationen von der Stromquelle oder aus dem Strom für den Lichtbogen zu beziehen, wird für die Regelung der Lichtquelle das vom Lichtbogen emittierte Licht gemessen. Die Leistung der Lichtquelle kann somit ebenfalls gut mit dem Bearbeitungsvorgang abgestimmt werden.

Vorteilhaft ist es dabei, wenn die Steuerung zur Reduktion der Leistung der Lichtquelle vorgesehen ist, wenn der lichtempfindliche Sensor schwaches Umgebungslicht registriert. Die Steuerung reduziert wiederum die Leistung des Blitzlichts, wenn der lichtempfindliche Sensor schwaches Umgebungslicht registriert. Beispielsweise heißt das, dass insbesondere wenn der Lichtbogen wegen eines Kurzschlusses oder dem Ende des Schweißvorgangs erlischt oder bei Rücknahme des Schweißstroms schwächer brennt, die Leuchtquelle weniger hell leuchtet.

Vorteilhaft ist es weiterhin, wenn die Steuerung einen Eingang für ein Signal von einer Stromquelle für den Lichtbogen umfasst und der Start des Bilderfassungsvorgangs mit dem Signal regelbar ist. Auf diese Weise können Informationen der Stromquelle oder Informationen, die aus dem Strom für den Lichtbogen erhalten werden können, für den Start des Bilderfassungsvorgangs nutzbar gemacht werden. Der Bilderfassungsvorgang kann somit wiederum besonders gut mit dem Bearbeitungsvorgang abgestimmt werden.

Vorteilhaft ist es auch, wenn ein Bilderfassungsvorgang nur dann durchgeführt wird, wenn beispielsweise die Schweißstromquelle einen Kurzschluss an der Schweißstelle oder einen starken Rückgang des Schweißstroms signalisiert oder der lichtempfindliche Sensor schwaches Umgebungslicht registriert. Es gibt Schweißverfahren, bei denen der Lichtbogen nicht ständig mit derselben Intensität brennt, z.B. beim Impulsschweißen, bei dem der Schweißstrom zwischen einem Grundwert (ca. 30 A) und einem Spitzenwert (ca. 400 A) hin- und hergeschalten wird, oder sogar periodisch zusammenfällt. Bei dieser Variante der Erfindung wird der Bilderfassungsvorgang dann ausgelöst, wenn der Lichtbogen nicht oder nur schwach brennt. Auf diese Weise kann die erforderliche Lichtleistung der Blitzlampe deutlich reduziert werden. Alternativ oder zusätzlich zum Eingang für die Schweißstromquelle kann auch ein lichtempfindlicher Sensor zu demselben Zweck vorgesehen werden. Dieser registriert ebenfalls, wenn der Lichtbogen schwach oder nicht brennt und kann dies an die Steuerung signalisieren, welche dann den Bilderfassungsvorgang entsprechend mit den Lichtbogen-Pausen synchronisiert.

Günstig ist es, wenn das erfindungsgemäße Überwachungsmodul an einem Brenner zur Durchführung eines Prozesses mit einem Lichtbogen (wobei der Lichtbogen insbesondere mit einem Schutzgas aus einer Gasdüse geschützt ist) montiert ist. Der Vorteil des erfindungsgemäßen Überwachungsmoduls tritt hier besonders hervor, da der Lichtbogen extrem hell brennt und eine Bildaufnahme ohne Blitzlicht nur die allernächste Umgebung des Lichtbogens zeigen würde. Nichts desto trotz eignet sich die erfindungsgemäße Vorrichtung aber auch für andere Bearbeitungsverfahren mit einem Lichtbogen, beispielsweise für das Schweißen, Löten, Schneiden, Reinigen, Laserschweißen, Laser-Hybrid-Schweißen, Plasmaprozesse und andere. Das heißt also, dass das Überwachungsmodul vielfältig eingesetzt werden kann, da dessen Bilderfassung im Wesentlichen unabhängig vom Umgebungslicht ist. Vorteilhaft wird das Überwachungsmodul an einem fixen Punkt relativ zur Gasdüse montiert, wodurch diese einen fixen Bezugspunkt im Bild darstellt. Weitere Vorteile können aus den bereits Beschriebenen entnommen werden.

Vorteilhaft ist es auch, wenn der Brenner eine Gasdüse umfasst und das Überwachungsmodul derart am Brenner angeordnet ist, dass ein Lichtbogen bei der Bilderfassung in Richtung der optischen Achse der Kamera gesehen zumindest teilweise durch die Gasdüse verdeckt ist. Auf diese Weise kann der die Bildqualität störende Einfluss des Lichtbogens - wenn nicht ganz - wenigstens zum Teil eliminiert werden.

Vorteilhaft wird das Überwachungsmodul in ca. 20 - 30 cm Abstand vom Lichtbogen bzw. Drahtende am Schweißbrenner montiert. Durch die relativ große Entfernung kann der Rohrbogen des Brenners frei zugänglich gehalten werden, was den Wechsel von Verschleißteilen wie Gasdüse und Kontaktrohr nicht beeinträchtigt. Damit bleibt eine gute Zugänglichkeit für die jeweiligen Anwendungen erhalten. Des Weiteren ist dadurch sowohl ein Spritzerschutz als auch ein Strahlungsschutz gegeben. Aufgrund des Strahlungsschutzes kann gegebenenfalls auch die Leistung der Lichtquelle reduziert werden.

Erfindungsgemäß wird vorteilhaft auch eine Abdeckung für zumindest eine Öffnung eines Überwachungsmoduls vorgesehen, wobei die Abdeckung aus einer runden Frontscheibe mit einer konzentrischen, zylindrischen Befestigungsfläche besteht, wobei die zylindrische Befestigungsfläche einen geringeren Durchmesser als die Frontscheibe aufweist, und wobei in der Frontscheibe ein Luftauslass oder zumindest eine Umlenkvorrichtung integriert ist, welcher oder welche zur Ausrichtung des austretenden Luftstrahls quer zur optischen Achse einer Kamera des Überwachungsmoduls vorgesehen ist.. Diese Form der Abdeckung lässt sich einerseits leicht herstellen aber auch leicht montieren. Durch die Integration eines Luftauslasses erfüllt sie zudem einen Doppelnutzen.

Vorteilhaft ist es dabei, wenn die zumindest eine Umlenkvorrichtung außen an einem Kreisring der Frontscheibe angeordnet ist. Auf diese Weise kann der austretende Luftstrom quer zur optischen Achse der Kamera und/oder der Lichtquelle, beziehungsweise im Wesentlichen parallel zur Außenfläche der Abdeckung ausgerichtet werden. Auf diese Weise kann die Außenfläche der Abdeckung optimal vor Verschmutzung geschützt werden.

Vorteilhaft ist es schließlich, wenn zumindest am Außenmantel der zylindrischen Befestigungsfläche zumindest eine Befestigungsvorrichtung angeordnet ist Auf diese Weise kann die Abdeckung am Gehäuse fixiert werden, sodass sie nicht unbeabsichtigt herausfallen kann.

Die obigen Ausgestaltungen und Weiterbildungen der Erfindung können auf beliebige Art und Weise kombiniert werden.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes schematisch dargestelltes Überwachungsmodul;
- Fig. 2: eine dreidimensionale Ansicht eines konkret ausgeführten Überwachungsmoduls bei offenem Gehäuse;
- Fig. 3: einen Schnitt durch das konkret ausgeführte Überwachungsmodul;
- Fig. 4: einen Schnitt durch ein weiteres, konkret ausgeführtes Überwachungsmodul;
- Fig. 5: die Anordnung des erfindungsgemäßen Überwachungsmoduls an einem Schweißbrenner und
- Fig. 6: die Anordnung des erfindungsgemäßen Überwachungsmoduls an einem Industrieroboter.

Einführend wird festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die Ausführungsbeispiele zeigen mögliche Ausführungsvarianten eines erfindungsgemäßen Überwachungsmoduls, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

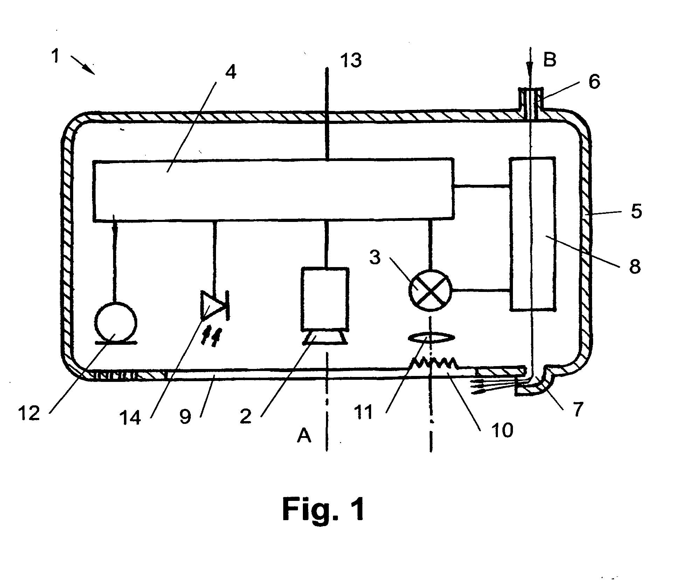

Die Beschreibung der folgenden Figuren 1 bis 6 ist in Zusammenschau zu lesen.

Fig. 1 zeigt schematisch ein Überwachungsmodul 1 zur Überwachung zumindest eines Bearbeitungsprozesses mit zumindest einem in einem Brenner erzeugten Lichtbogen, umfassend eine Kamera 2, eine Lichtquelle 3 und eine Steuerung 4, welche die Lichtquelle 3 derart ansteuert, dass sie zur Zeit der Aufnahme eines Bildes durch die Kamera 2 leuchtet. Erfindungsgemäß sind die genannten Komponenten 2, 3, 4 in einem gemeinsamen Gehäuse 5 angeordnet. Das Gehäuse 5 umfasst einen Druckluftanschluss 6 und zumindest einen Luftauslass 7, der insbesondere quer zur optischen Achse A der Kamera 2 ausgerichtet ist.

Zwischen dem Druckluftanschluss 6 und dem zumindest einen Luftauslass 7 erfolgt mit der Strömung der Luft im Strömungsverlauf B eine Kühlung im Inneren des Gehäuses 5. Insbesondere werden die Lichtquelle 3 und die elektronischen und/oder elektrischen Komponenten, wie die Ladeschaltung 8 für die Lichtquelle 3 (z.B. eine Blitzlampe) gekühlt. Selbstverständlich kann auch eine bessere Kühlung der Steuerung 4 und der Lichtquelle 3 vorgesehen werden, wenn der Strömungsverlauf B durch Vorsehen entsprechender Kanäle direkt über die genannten Komponenten geführt wird. Weiterhin umfasst das Gehäuse 5 eine (hier aus Kunststoff bestehende) transparente Abdeckung 9 für die Kamera 2 und die Lichtquelle 3. Die Abdeckung 9 ist bevorzugt aus Kunststoff gefertigt, wobei in der Abdeckung 9 zusätzlich ein Diffusor 10 für die Lichtquelle 3 integriert sein kann. Die Verwendung eines Diffusors 10 ist dabei von der Art der Lichtquelle 3 abhängig. Das heißt, dass wenn als Lichtquelle 3 beispielsweise eine Blitzlampe vorgesehen ist, in aller Regel ein Diffusor 10 erforderlich ist, wohingegen bei Vorsehen eines mit LED's gebildeten Flächenstrahlers als Lichtquelle 3 in der Regel kein Diffusor 10 benötigt wird. Bei Verwendung eines Diffusors 10 ist dieser wie abgebildet vorzugsweise auf der Innenseite der Abdeckung 9 angeordnet. In dem Gehäuse 5 kann auch eine Linse 11 zur Bündelung des Lichts der Lichtquelle 3 eingebaut sein. Weiterhin kann in dem Gehäuse 5 zusätzlich ein Mikrofon 12 angeordnet sein, welches im Wesentlichen wie die Kamera 2 in Richtung des Lichtbogens beziehungsweise der Bearbeitungsstelle ausgerichtet ist. Im Gehäuse 5 sind dazu Schalleintrittsöffnungen vorgesehen. Zusätzlich umfasst die Steuerung 4 einen Eingang 13 für ein Signal von der Stromquelle, welche für die Erzeugung eines Lichtbogens vorgesehen ist, sowie einen lichtempfindlichen Sensor 14, welcher im Wesentlichen wie die Kamera 2 in Richtung Lichtbogen oder Bearbeitungsstelle ausgerichtet ist.

Die Funktion der in Fig. 1 dargestellten Anordnungen ist wie folgt:

Mit Hilfe der Kamera 2, welche durch die transparente Abdeckung 9 blickt, kann beispielsweise eine (hier nicht dargestellte) Schweißstelle beobachtet werden. Wie bekannt ist, ist ein beim Schweißen eingesetzter Lichtbogen und die unmittelbare Umgebung desselben extrem hell. Die weiter entfernt liegenden Regionen sind dagegen relativ dunkel. Diese hohen Kontraste überfordern Standardkameras bei weitem, da deren Dynamikumfang um einige Blendenstufen kleiner ist, als dies für den beim Schweißen vorliegenden Kontrast nötig wäre. Aus diesem Grund wird die Schweißstelle zusätzlich mit der Lichtquelle 3 ausgeleuchtet, deren Licht mit Hilfe einer Linse 11 (oder auch einem komplexeren optischen System) auf die Schweißstelle bzw. auf den Bereich um den Lichtbogen konzentriert wird. Um die Bildung harter, vom Blitzlicht verursachter, Schatten zu vermeiden, ist insbesondere bei Vorsehen einer Blitzlampe als Lichtquelle 3 in der transparenten Abdeckung 9 zusätzlich ein Diffusor 10 eingearbeitet, der das emittierte Licht streut.

Mit Hilfe der Lichtquelle 3 kann nun auch die Umgebung der Schweißstelle so ausgeleuchtet werden, dass die Kamera 2 alle für die Beobachtung der Schweißstelle relevanten Details erfassen kann. Die Lichtquelle 3 wird dabei mit Hilfe einer Steuerung 4 so angesteuert, dass sie zur Zeit der Bilderfassung durch die Kamera 2 leuchtet. Dazu ist die Kamera 2 entsprechend mit der Steuerung 4 verbunden. Die Lichtquelle 3 kann dabei während der gesamten Belichtungszeit der Kamera 2 leuchten oder aber auch nur für eine geringere Zeitdauer, insbesondere zu Beginn ("1. Verschlussvorhang") oder am Ende ("2. Verschlussvorhang") der Belichtungszeit. In diesem Beispiel wird angenommen, dass es sich bei der Lichtquelle 3 um eine Blitzlampe handelt. Die Steuerung 4 steuert die Blitzlampe 3 in diesem Beispiel nicht direkt an, sondern über die Ladeschaltung 8, die aus Komponenten der Leistungselektronik besteht und in den Leuchtpausen in an sich bekannter Weise einen oder mehrere Kondensatoren auflädt, welche beim Zünden einer als Lichtquelle 3 vorgesehenen Blitzlampe 3 entladen werden. Die Anordnung der Steuerung 4 und der Ladeschaltung 8 ist bloß beispielhaft zu sehen. Selbstverständlich kann die Steuerung 4 und die Ladeschaltung 8 auch Teil der Kamera 2 sein. Grundsätzlich erfolgt also die Ansteuerung der Lichtquelle 3 in Abhängigkeit des Zeitpunkts der Bilderfassung durch die Kamera 2.

Aufgrund der hohen Lichtleistungen, die für das Ausleuchten der Schweißstelle nötig sind, erwärmt sich die Ladeschaltung 8 beträchtlich. Aus diesem Grund verfügt das Überwachungsmodul 1 über einen Druckluftanschluss 6, über welchen Druckluft zur Kühlung über die Ladeschaltung 8 (und vorzugsweise auch über die Steuerung 4) geleitet wird. Diese Druckluft steht im Produktionsbereich in der Regel ohnehin zur Verfügung. Die Abluft wird über eine Öffnung, welche einen Luftauslass 7 darstellt, wieder ins Freie geleitet. Der Luftauslass 7 ist dabei so ausgerichtet, dass der austretende Luftstrahl die optische Achse A der Kamera 2 kreuzt und so die optischen Komponenten, im gezeigten Beispiel konkret die transparente Abdeckung 9, frei von Schmauch und Ablagerungen hält. Vorzugsweise ist der Luftauslass 7 dabei im Wesentlichen im rechten Winkel zur optischen Achse A der Kamera 2, beziehungsweise im Wesentlichen parallel mit der transparenten Abdeckung 9 ausgerichtet.

Im gezeigten Beispiel umfasst das Überwachungsmodul 1, das heißt konkret die Steuerung 4 einen Eingang 13 für ein Signal von einer (Schweiß)stromquelle und/oder einer Robotersteuerung. Die Steuerung 4 hält den Bilderfassungsvorgang an, wenn die Stromquelle und/oder die Robotersteuerung eine Unterbrechung oder das Ende des Bearbeitungsvorgangs signalisiert. Demnach regelt die Steuerung 4 den Bilderfassungsvorgang.

Alternativ oder zusätzlich wird die Leistung der Lichtquelle 3 reduziert, wenn die Lichtbogen-Stromquelle einen Kurzschluss an der Bearbeitungsstelle oder einen starken Rückgang des Schweißstroms signalisiert. Da bei einem Kurzschluss kein Lichtbogen vorhanden ist, welcher das Bild überstrahlen würde, kann ein Bild mit reduzierter Lichtleistung aufgenommen werden. Die erforderliche Lichtleistung richtet sich dabei im Wesentlichen an der Stärke des Umgebungslichts und dem Licht des glühenden Metalls sowie an der gewünschten Verschluss- oder Belichtungszeit. Demnach regelt die Steuerung 4 die Leistung der Lichtquelle 3. Man kann also sagen, dass von der Steuerung 4 eine Ansteuerung der Lichtquelle 3 bzw. der Bilderfassung in Abhängigkeit des Schweißprozesses erfolgt, sodass die Bedingungen der Lichtquelle 3 bzw. der Bilderfassung an den Schweißprozesszustand angepasst wird. Es ist auch möglich, dass das Schweißgerät bzw. die Stromquelle durch Übermittlung von Schweißparametern, die im Überwachungsmodul 1 zur Bilderfassung und Steuerung der Lichtquelle 3 ausgewertet werden, einen Einfluss bzw. eine Steuerung der Lichtquelle 3 bzw. der Bilderfassung vornehmen kann.

Anstelle des Eingangs 13 oder zusätzlich dazu kann zu demselben Zweck ein lichtempfindlicher Sensor 14 vorgesehen sein, welcher im Wesentlichen gleich ausgerichtet ist wie die Kamera 2, und mit der Steuerung 4 verbunden ist. Die Steuerung 4 reduziert wiederum die Leistung des Blitzlichts, wenn der lichtempfindliche Sensor 14 schwaches Umgebungslicht registriert, das heißt insbesondere wenn der Lichtbogen wegen eines Kurzschlusses oder dem Ende des Schweißvorgangs erlischt. Demnach regelt wiederum die Steuerung 4 die Leistung der Lichtquelle 3.

Schließlich kann die Steuerung 4 derart ausgelegt sein, dass ein Bilderfassungsvorgang nur dann durchgeführt wird, wenn die (Schweiß)stromquelle einen Kurzschluss an der Bearbeitungsstelle oder einen starken Rückgang des Stroms signalisiert und/oder der lichtempfindliche Sensor 14 schwaches Umgebungslicht registriert. Demnach regelt die Steuerung 4 mit dem Signal den Start des Bilderfassungsvorgangs. Es gibt z.B. Schweißverfahren, bei denen der Lichtbogen nicht ständig mit derselben Intensität brennt, z.B. beim Impulsschweißen, bei dem der Schweißstrom zwischen einem Grundwert (ca. 30 A) und einem Spitzenwert (ca. 400 A) hin- und hergeschalten wird, oder sogar periodisch zusammenfällt. Ein weiteres Beispiel ist das CMT-Schweißen (Cold Metal Transfer). Bei dieser Variante der Erfindung wird der Bilderfassungsvorgang dann ausgelöst, wenn der Lichtbogen nicht oder nur schwach brennt. Auf diese Weise kann die erforderliche Lichtleistung der Lichtquelle 3 deutlich reduziert werden. Alternativ oder zusätzlich zum Eingang 13 kann auch hier der lichtempfindliche Sensor 14 zu demselben Zweck vorgesehen werden. Dieser registriert ebenfalls, wenn der Lichtbogen schwach oder nicht brennt und kann dies an die Steuerung signalisieren, welche dann den Bilderfassungsvorgang entsprechend mit den Lichtbogen-Pausen synchronisiert.

Schließlich erfasst die Steuerung 4 auch das Signal des Mikrofons 12, um daraus Rückschlüsse auf die Qualität des Schweißvorgangs ziehen zu können und gegebenenfalls einen Fehler beim Schweißvorgang zu melden oder diesen zu beeinflussen. Schließlich kann beispielsweise auch das Mikrofon 12 - in ähnlicher Weise wie der lichtempfindliche Sensor 14 - dazu verwendet werden, um den Bilderfassungsvorgang zu steuern. Beispielsweise kann der Bilderfassungsvorgang gestoppt werden, wenn kein Schweißgeräusch mehr aufgenommen wird, oder gestartet werden, wenn ein solches Geräusch detektiert wird.

Somit kann mit dem Überwachungsmodul die Online-Überwachung eines Prozesses mit einem Lichtbogen, wie dem beschriebenen Schweißprozess, durchgeführt werden. Das heißt, dass die regelmäßigen Bilder der Bilderfassung über den Datenbus an die Auswerteeinheit übermittelt werden, welche im Wesentlichen aus den gelieferten Bildern einen Film liefert. Durch die qualitativ hochwertigen Bilder kann der Schweißprozess aus der Ferne sehr realistisch live beobachtet bzw. überwacht werden.

Fig. 1 zeigt ein Überwachungsmodul 1, welches vergleichsweise viele erfinderische Merkmale in sich vereint. Selbstverständlich kann aber auch eine vereinfachte Variante des Überwachungsmoduls 1 zum Einsatz kommen. Beispielsweise kann das Mikrofon 12 und/oder der lichtempfindliche Sensor 14 entfallen. Desgleichen ist das Führen eines Druckluftstrahls durch das Gehäuse 5 nicht zwingend. Der Luftstrahl kann - wenngleich er von Vorteil ist - auch weggelassen werden oder beispielsweise auch durch ein im Gehäuse 5 angeordnetes Gebläse (nicht dargestellt) aufgebaut werden. Der Fachmann wird hier ohne Mühe eine Auswahl der für ihn notwendigen Komponenten treffen und die Erfindung auf seine Bedürfnisse anpassen können, ohne dazu erfinderisch tätig werden zu müssen.

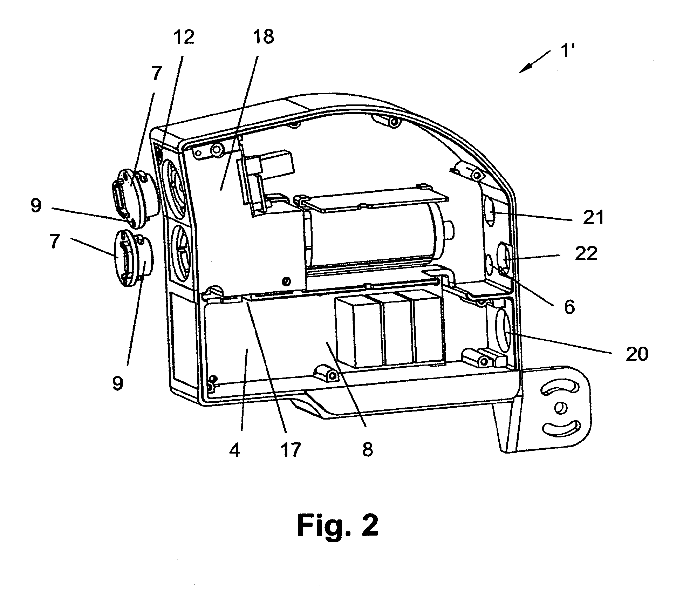

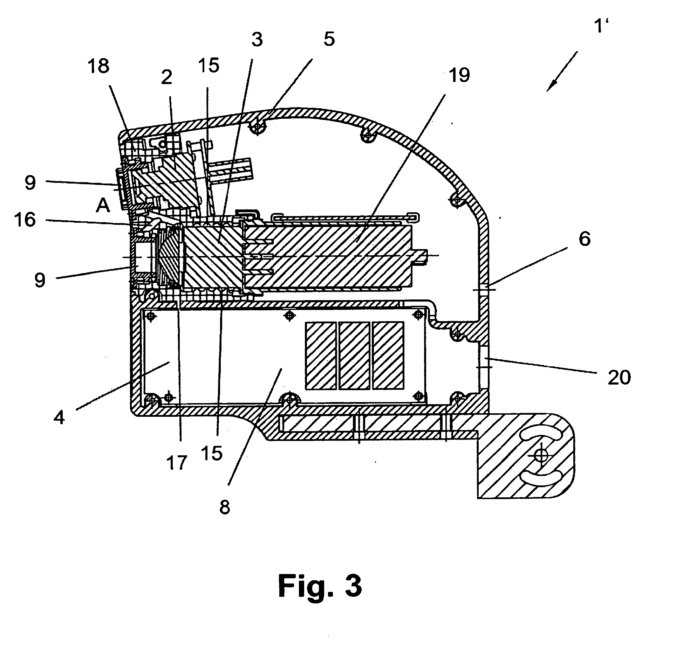

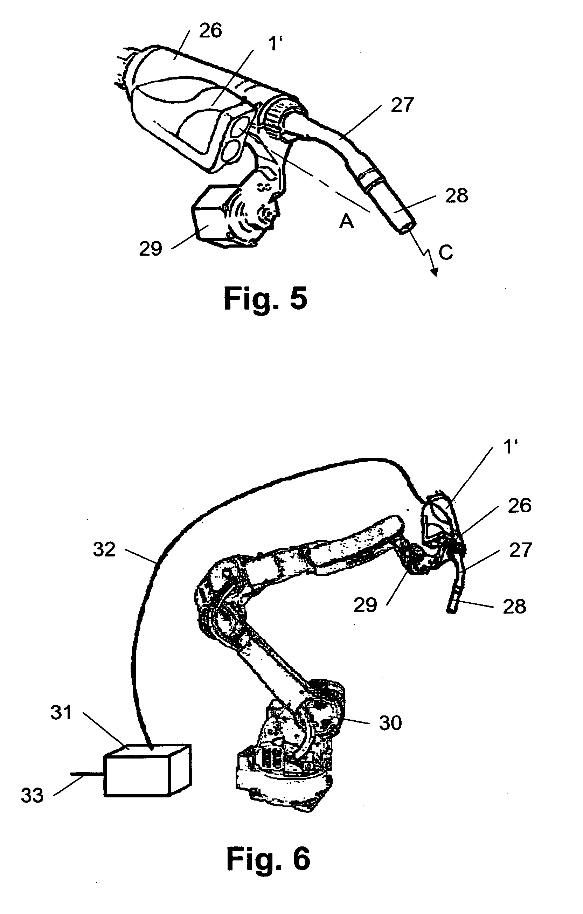

Fig. 2 und 3 zeigen nun ein konkret ausgeführtes Überwachungsmodul 1' in perspektivischer Darstellung mit geöffnetem Gehäuse 5 beziehungsweise im Schnitt, welches eine Kamera 2 und eine Blitzlampe als Lichtquelle 3 in einem gemeinsamen Gehäuse 5 umfasst. Entsprechend ist für die Kamera 2 und die Blitzlampe 3 bevorzugt an einer Stirnseite des Gehäuses 5 je eine Öffnung integriert, sodass ein Blick Richtung Lichtbogen möglich ist. Ebenso ist die Steuerung 4 der Kamera 2 in diesem Beispiel mit einer Ladeschaltung 8 kombiniert und im Gehäuse 5 integriert. Gut zu erkennen ist, dass die optische Achse A der Kamera 2 und die optische Achse der Blitzlampe 3 bei dieser Variante nicht parallel, sondern winkelig zueinander ausgerichtet sind. Die beispielsweise zu beobachtende Schweißstelle liegt idealerweise im Schnittpunkt der beiden Achsen oder zumindest nahe davon. Entsprechend wird der Winkel der Achsen zueinander in Abhängigkeit der Distanz zwischen Schweißstelle und Überwachungsmodul 1' gewählt. Hauptsächlich wird dabei die Distanz von dem für die Anwendung erforderlichen Brenner 26 bestimmt. Dies deshalb, da das Überwachungsmodul 1' vorzugsweise am Brennerkörper befestigt wird, sodass die Zugänglichkeit für einen Rohrbogen 27 des Brenners 26 aufrechterhalten wird (siehe hierzu die Figuren. 5 und 6). Ebenso kann dieser einfach, gegebenenfalls auch automatisiert, gewechselt werden. Des Weiteren ergibt sich durch die Distanz zum Lichtbogen auch automatisch ein Schutz vor sogenannten Schweißspritzern bei einem Schweißprozess.

Die Führung der Druckluft ist vorteilhaft so ausgerichtet, dass die Abluft vor dem Austritt aus dem Gehäuse 5 zirkuliert. Entsprechend ist für die Kühlung der Ladeschaltung 8 und der Steuerung 4 kein hoher Druck bzw. Durchfluss der Luft erforderlich, sodass eine Abzweigung gemäß der Kühlverbindung 17 ausreicht. Hingegen ist zur Reinigung der Abdeckungen 9 ein höherer Druck bzw. Durchfluss der Luft erforderlich. Daher sind die Reinigungskanäle 16 im Verlauf des Kühlkanals 15 angeordnet, sodass der austretende Luftstrahl im Wesentlichen ohne Druckverlust bzw. Durchflussverlust die optische Achse A der Kamera 2 kreuzt und so die optischen Komponenten, im gezeigten Beispiel konkret die transparenten Abdeckungen 9, frei von Schmauch und Ablagerungen hält. Vorzugsweise ist der Luftauslass 7 dabei im Wesentlichen im rechten Winkel zur optischen Achse A der Kamera 2 beziehungsweise im Wesentlichen parallel mit den transparenten Abdeckungen 9 ausgerichtet.

Bei Verwendung einer Blitzlampe als Lichtquelle 3 ist für diese in der Regel eine Kühlung erforderlich. Dazu wird die über den Druckluftanschlusses 6 eingeleitete Druckluft in zumindest einen Kühlkanal 15 und zumindest einen Reinigungskanal 16 geführt. Bevorzugt ist der Druckluftanschluss 6 mit dem Kühlkanal 15 verbunden, welcher zuerst spiralförmig um die Blitzlampe 3 geführt ist. Am Ende des spiralförmigen Kühlkanals 15 wird dieser zumindest in eine Kühlverbindung 17 für die Ladeschaltung 8 sowie die Steuerung 4 und in den Reinigungskanal 16 aufgeteilt. Der Reinigungskanal 16 führt die Druckluft entsprechend zu den Abdeckungen 9, in denen ein Luftauslass 7 integriert ist. Somit ist bei dieser Ausführungsform der Luftauslass 7 für die Kamera 2 und die Lichtquelle 3 getrennt, wobei bevorzugt auch die Austrittsrichtung entgegengesetzt sind. Der jeweilige Luftauslass 7 ist dabei derart angeordnet, dass die Druckluft im Wesentlichen quer zur Achse der Kamera 2 bzw. der Lichtquelle 3 ausströmt. Zusätzlich ist der Luftauslass 7 auch derart ausgebildet (z.B. erhaben), dass die Abdeckungen 9 von außen, also ohne das Gehäuse 5 zu öffnen, bevorzugt mit einem Werkzeug gewechselt werden können.

Durch die Kühlverbindung 17 wird die Druckluft also im Wesentlichen in den abgeschlossenen Raum für die Ladeschaltung 8 bzw. Steuerung 4 geführt, wobei die Druckluft im Bereich der Verbindungskabel zwischen Lichtquelle 3 und Ladeschaltung 8 wieder in den Raum für die Kamera 2 und die Lichtquelle 3 strömt. Des Weiteren ist im Bereich der Kamera 2 im Gehäuse 5 eine Öffnung integriert, welche ebenso einen Luftauslass 7 darstellt. Somit ist gewährleistet, dass die Druckluft im Gehäuse 5 zirkuliert, wodurch eine effektive Kühlung erreicht wird.

Der spiralförmige Kühlkanal 15 ist beispielsweise in einem Körper 18 integriert, welcher gleichzeitig auch zur Aufnahme und Befestigung der Blitzlampe 3 und der Kamera 2 ausgebildet ist. Entsprechend sind in diesem Körper 18 auch die Reinigungskanäle 16 und die Kühlverbindung 17 integriert. Zusätzlich kann auch ein Lampensockel 19 der Blitzlampe 3 gekühlt werden. Beispielsweise erfolgt dies über die Kontakte zwischen der Blitzlampe 3 und dem Lampensockel 19. Die Druckluft dazu wird beispielsweise von der im Körper 18 integrierten Kühlverbindung 17 abgezweigt. Grundsätzlich ist für die Kühlung im Wesentlichen ein Durchfluss der Druckluft im Bereich ab 25 l/min je Überwachungsmodul bzw. Blitzlampe 3 erforderlich.

Die Abdeckungen 9 sind bevorzugt unterschiedlich ausgebildet, sodass die Abdeckung 9 mit dem Diffusor 10 stets an der Blitzlampe 3 positioniert werden muss. Ebenso ist ein Verdrehschutz integriert, sodass die korrekte Auslassrichtung eingestellt ist. Somit beeinflussen sich die beiden Luftauslässe 7 nicht gegenseitig. Des Weiteren wird verhindert, dass die ausströmende Luft gegebenenfalls über das Mikrofon 12 strömt. Die Abdeckungen 9 sind des Weiteren aus einer runden Frontscheibe und einem Befestigungszylinder gebildet, deren Mittelpunkt gleich ist. Der Befestigungszylinder hat dabei einen geringeren Durchmesser als die Frontscheibe, sodass ein Kreisring um den Befestigungszylinder resultiert. Ebenso ist in der Frontscheibe der Luftauslass 7 integriert. Konkret ist der Luftauslass 7 im Bereich des Kreisrings angeordnet, sodass der Luftauslass 7 den Blick der Kamera 2 bzw. der Blitzlampe 3 - welcher aus dem Inneren des Befestigungszylinders durch die Frontscheibe erfolgt, nicht beeinträchtigt. Der Luftauslass 7 ist dabei als Umlenkvorrichtung ausgebildet, sodass die Druckluft über die Frontscheibe strömt und diese reinigt. Weiters werden die Abdeckungen 9 entsprechend über den Befestigungszylinder in den Öffnungen der Stirnseite des Gehäuses 5 befestigt, indem zumindest am Außenmantel des Befestigungszylinders zumindest eine Befestigungsvorrichtung angeordnet ist. Diese ist beispielsweise als Bajonett ausgeführt.

Die Druckluft kann selbstverständlich auch von einer Zuleitung für den Brenner abgezweigt werden, wodurch entsprechend Leitungen im Schlauchpaket eingespart werden. Die Strömungsrichtung und die Durchflussmenge der Druckluft kann dabei über ein Ventil von der Steuerung 4 und/oder der Stromquelle geregelt werden.

Das Gehäuse 5 umfasst zusätzlich eine Öffnung 20 für ein Stromversorgungskabel, eine Öffnung 21 für ein Videokabel und eine Öffnung 22 für ein Audiokabel.

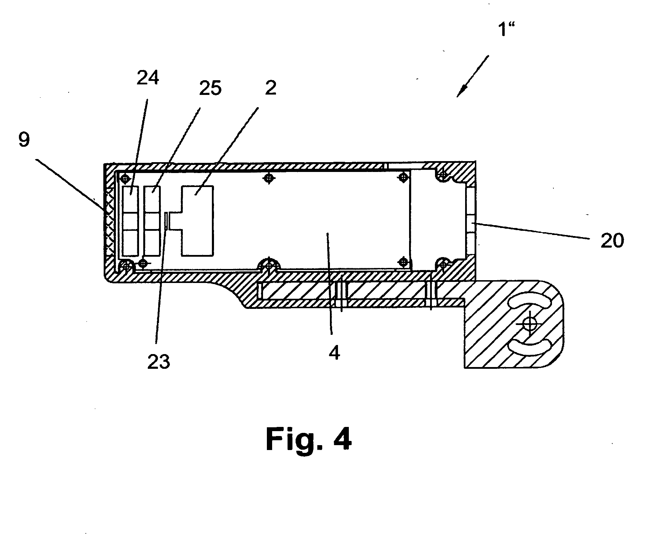

Fig. 4 zeigt eine weitere Variante einer erfindungsgemäßen Überwachungseinrichtung 1", bei der LEDs als Lichtquelle 3 vorgesehen sind. Bei Verwendung zumindest einer LED als Lichtquelle 3 kann die Kühlung im Wesentlichen entfallen. Ebenso ist kein Diffusor 10 erforderlich, da bei Verwendung mehrerer LED's, beispielsweise in Form eines sogenannten LED-Arrays 24, also einem Flächenstrahler, die diffuse Lichtquelle 3 automatisch größer wird. Die Bilderfassung mit dem Überwachungsmodul 1' gemäß Fig. 4 kann hierbei derart optimiert werden, dass die einzelnen LED's bzw. mehrere LED's gemeinsam unterschiedlich angesteuert werden. Somit kann im Wesentlichen ein Schatteneffekt beeinflusst werden. Generell ist die Fokussierung der LED's auf den Kamerafokus und die Distanz der Kamera 2 zum Lichtbogen abgestimmt. Zur Bündelung des Lichts des LED's kann auch ein Reflektor 25 eingesetzt werden, sodass das Licht auf die Bearbeitungsstelle gebündelt wird. LED's benötigen des Weiteren eine wesentlich kleinere Ladeschaltung, sodass der Platzbedarf des Gehäuses 5 erheblich reduziert werden kann. Beispielsweise können die LED's auch um die Kamera 2 angeordnet werden. Entsprechend werden der Reflektor 25 und die LED's mit einer Abdeckung 9 (z.B. aus Glas) geschützt, welche ebenso mit einem Reinigungskanal 16 bzw. Luftauslass 7 versehen sein kann.

Die Bilderfassung kann aber durch den Einsatz von Filtern 23, welche den störenden Einfluss des Lichtbogens reduzieren, verbessert werden. Der Filter 23 wird vor der Kamera 2 angeordnet und bewirkt dabei, dass nur Licht mit einer bestimmten Wellenlänge, beispielsweise im Bereich von 600 nm bis 700 nm, passieren kann. Dementsprechend ist die Lichtquelle 3 mit dem Filter 23 abgestimmt. Dadurch wird eine verlängerte Belichtungszeit der Kamera 2 erreicht, ohne dass eine Überbelichtung erfolgt.

Fig. 5 zeigt nun ein Beispiel wie das Überwachungsmodul 1' an einem Schweißbrenner 26 angeordnet sein kann. Dies ist entsprechend auf einen Schneidbrenner, Plasmabrenner, einen Brenner für Reinigungsverfahren und dergleichen übertragbar. Der Schweißbrenner 26 umfasst dabei einen Rohrbogen 27, eine Gasdüse 28, sowie eine Befestigungsvorrichtung 29. Gut zu erkennen sind die beiden kreisförmigen Öffnungen im Gehäuse des Überwachungsmoduls 1' für die Kamera 2 und die Lichtquelle 3 (nicht dargestellt). Das Überwachungsmodul 1' ist in diesem Beispiel derart am Schweißbrenner 26 angeordnet, dass im Wesentlichen eine Einheit gebildet wird und ein Lichtbogen C in Richtung der optischen Achse A der Kamera 2 gesehen zumindest teilweise durch die Gasdüse 28 verdeckt ist. Auf diese Weise kann der auf die Bildqualität störende Einfluss des Lichtbogens C zusätzlich reduziert werden. Das heißt aber auch, dass auf dem über den Datenbus an die Auswerteeinheit gelieferten Bild immer die Gasdüse 28 sichtbar ist. Dies ist sowohl bei einer vorlaufenden, nachlaufenden und/oder seitlichen Überwachung der Schweißstelle der Fall.

Am Brenner 26 können auch mehrere Überwachungsmodule 1' befestigt werden beziehungsweise können mehrere Kameras 2 in einem Überwachungsmodul 1' angeordnet werden. Aus diesem Grund können auch Hub's im Überwachungsmodul 1' integriert sein, sodass die Anzahl der Versorgungsleitungen bzw. Busleitungen minimiert wird. Somit kann aufgrund dieser Online-Überwachung (also bei aktiven bzw. brennenden Lichtbogen C) des Schweißprozesses unmittelbar die Qualität des Schweißprozesses beurteilt werden. Dabei bezieht sich die Qualität primär auf das Schweißergebnis, sodass es im Wesentlichen nicht erforderlich ist, den Lichtbogen C am Bild zu erfassen. Dazu wird bei einer nachlaufenden Überwachung das Überwachungsmodul 1' derart am Brenner 26 befestigt, dass an einem Bildrand der laufende Schweißprozess mit dem Schmelzbad zumindest zum Teil ersichtlich ist und am restlichen Bild die Schweißraupe als Schweißergebnis des bereits durchgeführten Schweißprozesses ersichtlich ist. Die Bildqualität wird entsprechend auch durch die extrem kurze Belichtungszeit im Bereich von 1 ms verbessert, da dadurch Störungen durch den Lichtbogen selbst, Fremd-Lichtquellen oder gegebenenfalls durch das Tageslicht keinen Einfluss haben.

Fig. 6 zeigt schließlich einen Industrieroboter 30, an dessen Arm mit Hilfe der Befestigungsvorrichtung 29 ein Schweißbrenner 26 mit einem Überwachungsmodul 1' befestigt ist. Selbstverständlich muss das Überwachungsmodul 1' nicht zwingend am Schweißbrenner 26 befestigt sein, sondern kann auch auf dem Industrieroboter 30 montiert sein. In der Fig. 6 ist zusätzlich eine Energieversorgung 31 dargestellt, welche über ein Versorgungskabel 32 die elektrische Energie 20 (hier bei 600 VDC) zum Überwachungsmodul 1' führt. Im Versorgungskabel 32 befindet sich im gezeigten Beispiel auch die Datenleitung bzw. Busleitung/Datenbus für die Video- beziehungsweise Audiodaten, beispielsweise eine USB- und/oder Ethernet-Datenleitung. Eine Netzleitung 33 stellt schließlich den Anschlüss zu einem Stromnetz (z.B. 230 VAC) her. Im gezeigten Beispiel ist in der Netzleitung 33 auch die Datenleitung für die Video- und/oder Audiodaten verlegt. Mit Hilfe dieser Datenleitung können die Daten dann beispielsweise zu einem abgesetzten PC geleitet und dort angezeigt beziehungsweise weiterverarbeitet werden. Selbstverständlich kann das Versorgungskabel 32 auch in einem Schlauchpaket zwischen den Brenner 26 und einer Stromquelle (nicht dargestellt) geführt sein. Beispielsweise ist das Schlauchpaket zumindest teilweise in den Armen des Roboters geführt, wie angedeutet. Somit ist auch denkbar, dass die Energieversorgung 31 von der Llichtbogen-Stromquelle durchgeführt wird bzw. in dieser integriert ist.

Der Ordnung halber sei abschließend darauf hingewiesen, dass zum besseren Verständnis des Überwachungsmoduls 1, 1' dieses beziehungsweise deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Schließlich können die einzelnen in den Fig. 1 bis 6 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1, 1', 1": Überwachungsmodul
2 Kamera
3 Lichtquelle
4 Steuerung
5 Gehäuse
6 Druckluftanschluß
7 Luftauslass
8 Ladeschaltung
9 Abdeckung
10 Diffusor
11 Linse
12 Mikrofon
13 Eingang für Lichtbogen-Stromquelle
14 lichtempfindlicher Sensor
15 Kühlkanal
16 Reinigungskanal
17 Kühlverbindung
18 Körper
19 Lampensockel
20 Öffnung für Stromversorgungskabel
21 Öffnung für Videokabel
22 Öffnung für Audiokabel
23 Filter
24 LED-Arrays
25 Reflektor
26 (Schweiß)Brenner
27 Rohrbogen
28 Gasdüse
29 Befestigungsvorrichtung
30 Industrieroboter
31 Energieversorgung
32 Versorgungskabel
33 Netzleitung
A optische Achse der Kamera
B Strömungsverlauf der Luft
C Lichtbogen

## Patentansprüche

1. Überwachungsmodul (1..1") zur Überwachung eines Prozesses mit einem Lichtbogen (C), wobei der Lichtbogen (C) mit einem Brenner (26) geführt ist, umfassend:
- eine Kamera (2),
- eine Lichtquelle (3),
- eine Steuerung (4), welche die Lichtquelle (3) derart ansteuert, dass sie zur Zeit der Bilderfassung durch die Kamera (2) leuchtet und
- ein gemeinsames Gehäuse (5), in dem zumindest die genannten Komponenten (2, 3, 4) angeordnet sind,
**dadurch gekennzeichnet, dass**
- das Gehäuse (5) einen Druckluftanschluss (6) umfasst sowie einen Luftauslass (7) oder eine am Gehäuse (5) angeordnete Umlenkvorrichtung, welcher oder welche zur Ausrichtung des austretenden Luftstrahls quer zur optischen Achse (A) der Kamera (2) vorgesehen ist, und
- eine durch die Druckluft verursachte Luftströmung über die Lichtquelle (3) und/oder die Steuerung (4) und/oder eine Ladeschaltung (8) für die Lichtquelle (3) geführt ist.

2. Überwachungsmodul (1..1") nach Anspruch 1, **dadurch gekennzeichnet, dass** die Kamera (2) und die Lichtquelle (3) in Richtung Lichtbogen (C) ausgerichtet sind, wobei deren Ausrichtung an den Abstand zwischen Lichtbogen (C) und Gehäuse (5) angepasst ist, sofern die optische Achse (A) der Kamera (2) und die optische Achse der Lichtquelle (3) zueinander winkelig angeordnet sind.

3. Überwachungsmodul (1..1") nach Anspruch 1 oder 2, **dadurch gekennzeichnet, dass** das Gehäuse (5) zur Befestigung am Brenner (26) ausgebildet ist.

4. Überwachungsmodul (1..1") nach einem der Ansprüche 1 bis 3, **dadurch gekennzeichnet, dass** die Druckluft zumindest in einem Kühlkanal (15) und einem Reinigungskanal (16) geführt ist, wobei zumindest ein Ende eines Reinigungskanals (16) als ein Luftauslass (7) ausgebildet ist

5. Überwachungsmodul (1..1") nach einem der Ansprüche 1 bis 4, **dadurch gekennzeichnet, dass** der Druckluflanschluss (6) mit dem Kühlkanal (15) verbunden ist und der Kühlkanals (15) zur Versorgung des Reinigungskanals (16) und zumindest des Bereichs um die Steuerung (4) ausgebildet ist.

6. Überwachungsmodul (1..1") nach einem der vorstehenden Ansprüche, **dadurch gekennzeichnet, dass** das Gehäuse (5) eine lösbare Abdeckung (9) für die Kamera (2) und/oder die Lichtquelle (3) umfasst, welche zumindest teilweise transparent und als Luftauslass (7) ausgebildet ist.

7. Überwachungsmodul (1..1") nach Anspruch 6, **dadurch gekennzeichnet, dass** die Abdeckung (9) aus Kunststoff besteht

8. Überwachungsmodul (1..1") nach einem der Ansprüche 6 oder 7, **dadurch gekennzeichnet, dass** in der Abdeckung (9) für die Lichtquelle (3) ein Diffusor (10) integriert ist.

9. Überwachungsmodul (1..1") nach einem der vorstehenden Ansprüche, **dadurch gekennzeichnet, dass** in dem Gehäuse (5) zusätzlich ein Mikrofon (12) angeordnet ist.

10. Überwachungsmodul (1..1") nach einem der vorstehenden Ansprüche, **dadurch gekennzeichnet, dass** die Steuerung (4) einen Eingang (13) für ein Signal von einer Stromquelle für den Lichtbogen (C) umfasst und der Bilderfassungsvorgang mit dem Signal steuerbar ist.

11. Überwachungsmodul (1..1") nach Anspruch 10, **dadurch gekennzeichnet, dass** die Steuerung (4) zum Anhalten des Bilderfassungsvorgangs vorgesehen ist, wenn die genannte Stromquelle eine Unterbrechung oder das Ende des Bearbeitungsvorgangs signalisiert.

12. Überwachungsmodul (1..1") nach einem der vorstehenden Ansprüche, **dadurch gekennzeichnet, dass** die Steuerung (4) einen Eingang (13) für ein Signal von einer Stromquelle für den Lichtbogen (C) umfasst und die Leistung der Lichtquelle (3) mit dem Signal regelbar ist.

13. Überwachungsmodul (1..1") nach Anspruch 12, **dadurch gekennzeichnet, dass** die Steuerung (4) zur Reduktion der Leistung der Lichtquelle (3) vorgesehen ist, wenn die genannte Stromquelle einen Kurzschluss an der Bearbeitungsstelle oder einen starken Rückgang des Bearbeitungsstroms signalisiert.

14. Überwachungsmodul (1..1") nach einem der Ansprüche 1 bis 13, **dadurch gekennzeichnet, dass**
- dieses einen lichtempfindlichen Sensor (14) umfasst, welcher im Wesentlichen zum Lichtbogen (C) ausgerichtet ist, und
- die Steuerung (4) einen Eingang für das Signal des lichtempfindlichen Sensors (14) umfasst, sodass die Leistung der Lichtquelle (3) in Abhängigkeit eines Signals des lichtempfindlichen Sensors (14) steuerbar ist

15. Überwachungsmodul (1..1") nach Anspruch 14, **dadurch gekennzeichnet, dass** die Steuerung (4) zur Reduktion der Leistung der Lichtquelle (3) vorgesehen ist, wenn der lichtempfindliche Sensor (14) schwaches Umgebungslicht registriert.

16. Überwachungsmodul (1..1") nach einem der vorstehenden Ansprüche, **dadurch gekennzeichnet, dass** die Steuerung (4) einen Eingang (13) für ein Signal von einer Stromquelle für den Lichtbogen (C) umfasst und der Start des Bilderfassungsvorgangs mit dem Signal regelbar ist.

17. Überwachungsmodul (1..1") nach Anspruch 16, **dadurch gekennzeichnet, dass** die Steuerung (4) derart vorbereitet ist, dass ein Bilderfassungsvorgang nur dann durchgeführt wird, wenn die Stromquelle für den Lichtbogen (C) einen Kurzschluss an der Bearbeitungsstelle oder einen starken Rückgang des Bearbeitungssstroms signalisiert oder der lichtempfindliche Sensor (14) schwaches Umgebungslicht registriert.

18. Überwachungsmodul (1..1") nach einem der Ansprüche 1 bis 17 mit einer Abdeckung (9) für zumindest eine Öffnung des Überwachungsmoduls (1..1"), **dadurch gekennzeichnet,**
- **dass** die Abdeckung (9) aus einer runden Frontscheibe mit einer konzentrischen, zylindrischen Befestigungsfläche besteht, wobei die zylindrische Befestigungsfläche einen geringeren Durchmesser als die Frontscheibe aufweist, und
- **dass** in der Frontscheibe ein Luftauslass (7) oder zumindest eine Umlenkvorrichtung integriert ist, welcher oder welche zur Ausrichtung des austretenden Luftstrahls quer zur optischen Achse (A) der Kamera (2) des Überwachungsmoduls (1..1") vorgesehen ist.

19. Überwachungsmodul (1..1") nach Anspruch 18, **dadurch gekennzeichnet, dass** die zumindest eine Umlenkvorrichtung außen an einem Kreisring der Frontscheibe angeordnet ist.

20. Überwachungsmodul (1..1") nach Anspruch 18 oder 19, **dadurch gekennzeichnet, dass** zumindest am Außenmantel der zylindrischen Befestigungsfläche zumindest eine Befestigungsvorrichtung angeordnet ist.

21. Brenner zur Durchführung eines Prozesses mit einem Lichtbogen (C), welcher mit einem Schutzgas aus einer Gasdüse (28) geschützt ist, **gekennzeichnet durch** ein am Brenner (26) befestigtes Überwachungsmodul (1..1") nach einem der Ansprüche 1 bis 20.

22. Brenner (26) nach Anspruch 21, **dadurch gekennzeichnet, dass** der Lichtbogen (C) bei der Bilderfassung durch die Gasdüse (17) aufgrund der Befestigung zumindest teilweise verdeckt ist.

## Claims

1. Monitoring module (1..1") for monitoring a process with an electric arc (C), with the electric arc (C) being led with a torch (26), comprising:
- a camera (2),
- a light source (3),
- a control system (4) which controls the light source (3) in such a way that it illuminates when the camera (2) records the image and
- a common housing (5) where at least the mentioned components (2, 3, 4) are arranged in, **characterized in that**
- the housing (5) comprises a compressed air connection (6) and an air outlet (7) or a deflection device arranged at the housing (5) that is provided for the orientation of the discharging air beam perpendicular to the optical axis (A) of the camera (2, and
- an air flow caused by the compressed air is led via the light source (3) and/or the control system (4) and/or a charging connection (8) for the light source (3).

2. Monitoring module (1..1") according to claim 1, **characterized in that** the camera (2) and the light source (3) are oriented in the direction of the electric arc (C) and their orientation is adjusted to the distance between the electric arc (C) and the housing (5), provided that the optical axis (A) of the camera (2) and the optical axis of the light source (3) are arranged transverse to each other.

3. Monitoring module (1..1") according to claim 1 or 2, **characterized in that** the housing (5) is embodied to be secured to the torch (26).

4. Monitoring module (1..1") according to one of claims 1 to 3, **characterized in that** the compressed air is led at least in one cooling channel (15) and a cleaning channel (16), and at least one ending of a cleaning channel (16) is embodied as an air outlet (7).

5. Monitoring module (1..1") according to one of claims 1 to 4, **characterized in that** the compressed air connection (6) is connected with the cooling channel (15) and the cooling channel (15) is embodied for feeding the cleaning channel (16) and at least in the region around the control system (4).

6. Monitoring module (1..1") according to one of the preceding claims, **characterized in that** the housing (5) comprises a detachable covering (9) for the camera (2) and/or the light source (3) which is at least partially transparent and embodied as an air outlet (7).

7. Monitoring module (1..1") according to claim 6, **characterized in that** the covering (9) is made of plastics.

8. Monitoring module (1..1") according to one of claims 6 to 7, **characterized in that** a diffuser (10) is integrated into the covering (9) for the light source (3).

9. Monitoring module (1..1") according to one of the preceding claims, **characterized in that** a microphone (12) is additionally arranged in the housing (5).

10. Monitoring module (1..1") according to one of the preceding claims, **characterized in that** the control system (4) comprises an input (13) for a signal from a current source for the electric arc (C) and the process of capturing an image can be controlled.

11. Monitoring module (1..1") according to claim 10, **characterized in that** the control system (4) is provided for stopping the process of capturing an image in case the said current source signals an interruption or the termination of the machining process.

12. Monitoring module (1..1") according to one of the preceding claims, **characterized in that** the control system (4) comprises an input (13) for a signal from a current source for the electric arc (C) and the power of the light source (3) can be controlled.

13. Monitoring module (1..1") according to claim 12, **characterized in that** the control system (4) is provided for the reduction of the power of the light source (3) in case the said current source signals a short circuit at the processing area or a strong reduction of the processing current.

14. Monitoring module (1..1") according to one of claims 1 to 13, **characterized in**
- **that** the latter comprises a light-sensitive sensor (14) which is essentially orientated towards the electric arc (C), and
- the control system (4) comprises an input for the signal of the light-sensitive sensor (14), with the result that the power of the light source (3) can be controlled depending on a signal of the light sensitive sensor (14).

15. Monitoring module (1..1") according to claim 14, **characterized in that** the control system (4) is provided for the reduction of the power of the light source (3) in case the light sensitive sensor (14) signals weak ambient light.

16. Monitoring module (1..1") according to one of the preceding claims, **characterized in that** the control system (4) comprises an input (13) for a signal from a current source for the electric arc (C) and the beginning of the process of capturing an image can be controlled by the signal.

17. Monitoring module (1..1") according to claim 16, **characterized in that** the control system (4) is arranged in such a way that a process of capturing an image is only performed if the current source for the electric arc (C) signals a short circuit at the processing area or a strong reduction of the processing current or the light-sensitive sensor (14) recognizes weak ambient light.

18. Monitoring module (1..1") according to one of claims 1 to 17 comprising a covering (9) for at least one opening of the monitoring module (1..1"), **characterized in**
- **that** the covering (9) is made of a circular front pane with a concentric, cylindrical fixing surface, and the cylindrical fixing surface has a smaller diameter than the frontpane, and
- **that** an air outlet or at least one deflection device is integrated into the frontpane which is provided for the orientation of the discharging air beam perpendicular to the optical axis (A) of the camera (2) of the monitoring module (1..1").

19. Monitoring module (1..1") according to claim 18, **characterized in that** the at least one deflection device is arranged at the outside of an annular ring of the frontpane.

20. Monitoring module (1..1") according to claim 18 or 19, **characterized in that** at least one fixing device is arranged at least at the lateral surface of the cylindrical fixing surface.

21. Torch for performing a process with an electric arc (C), which is protected with a protective gas from a gas nozzle (28), **characterized by** a monitoring module (1..1") according to one of claims 1 to 20 being secured to the torch (26).

22. Torch (26) according to claim 21, **characterized in that** the electric arc (C) is during the image capturing at least partially covered by the gas nozzle (17) due to the fixing.

## Revendications

1. Module de surveillance (1...1") pour la surveillance d'un processus de traitement à l'arc électrique (C), l'arc électrique (C) étant guidé avec un brûleur (26), comportant:
- une caméra (2),
- une source lumineuse (3),
- une commande (4) qui commande la source lumineuse (3) de telle sorte qu'elle rayonne à travers la caméra (2) à l'instant de la prise de vue, et
- un boîtier (5) commun, dans lequel sont disposés au moins lesdits composants (2, 3, 4),
**caractérisé en ce que**
- le boîtier (5) comporte un raccord pour air comprimé (6), ainsi qu'une sortie d'air (7) ou un dispositif de déviation disposé sur le boîtier (5), laquelle ou lequel sont prévus pour orienter le jet d'air sortant transversalement à l'axe optique (A) de la caméra (2), et
- un flux d'air, occasionné par l'air comprimé, est guidé à travers la source lumineuse (3) et/ou la commande (4) et/ou un circuit de charge (8) pour la source lumineuse (3).

2. Module de surveillance (1...1") selon la revendication 1, **caractérisé en ce que** la caméra (2) et la source lumineuse (3) sont orientées vers l'arc électrique (C), leur orientation étant ajustée à la distance entre l'arc électrique (C) et le boîtier (5), pour autant que l'axe optique (A) de la caméra (2) et l'axe optique de la source lumineuse (3) soient disposés en angle l'un par rapport à l'autre.

3. Module de surveillance (1...1") selon la revendication 1 ou 2, **caractérisé en ce que** le boîtier (5) est réalisé pour être fixé au brûleur (26).

4. Module de surveillance (1...1") selon l'une quelconque des revendications 1 à 3, **caractérisé en ce que** l'air comprimé est guidé au moins dans un conduit de refroidissement (15) et un conduit de nettoyage (16), au moins une extrémité d'un conduit de nettoyage (16) étant réalisée sous la forme d'une sortie d'air (7).

5. Module de surveillance (1...1") selon l'une quelconque des revendications 1 à 4, **caractérisé en ce que** le raccord pour air comprimé (6) est relié au conduit de refroidissement (15) et le conduit de refroidissement (15) est configuré pour alimenter le conduit de nettoyage (16) et au moins la zone autour de la commande (4).

6. Module de surveillance (1...1") selon l'une quelconque des revendications précédentes, **caractérisé en ce que** le boîtier (5) comporte un cache (9) amovible pour la caméra (2) et/ou la source lumineuse (3), lequel est au moins partiellement transparent et réalisé sous forme de sortie d'air (7).

7. Module de surveillance (1...1") selon la revendication 6, **caractérisé en ce que** le cache (9) est réalisé en matière plastique.

8. Module de surveillance (1...1") selon la revendication 6 ou 7, **caractérisé en ce qu'**un diffuseur (10) est intégré dans le cache (9) pour la source lumineuse (3).

9. Module de surveillance (1...1") selon l'une quelconque des revendications précédentes, **caractérisé en ce qu'**un microphone (12) est disposé en plus dans le boîtier (5).

10. Module de surveillance (1...1") selon l'une quelconque des revendications précédentes, **caractérisé en ce que** la commande (4) comporte une entrée (13) pour un signal venant d'une source de courant pour l'arc électrique (C) et le processus de prise de vue peut être commandé au moyen du signal.

11. Module de surveillance (1...1") selon la revendication 10, **caractérisé en ce que** la commande (4) est prévue pour arrêter le processus de prise de vue lorsque ladite source de courant signale une interruption ou la fin du processus de traitement.

12. Module de surveillance (1...1") selon l'une quelconque des revendications précédentes, **caractérisé en ce que** la commande (4) comporte une entrée (13) pour un signal venant d'une source de courant pour l'arc électrique (C), et la puissance de la source lumineuse (3) peut être réglée au moyen du signal.

13. Module de surveillance (1...1") selon la revendication 12, **caractérisé en ce que** la commande (4) est prévue pour réduire la puissance de la source lumineuse (3), lorsque ladite source de courant signale un court-circuit sur le lieu de traitement ou une forte baisse du courant de traitement.

14. Module de surveillance (1...1") selon l'une quelconque des revendications 1 à 13, **caractérisé en ce que**
- celui-ci comporte un capteur photosensible (14) qui est orienté sensiblement vers l'arc électrique (C), et
- la commande (4) comporte une entrée pour le signal du capteur photosensible (14), de telle sorte que la puissance de la source lumineuse (3) peut être commandée en fonction d'un signal du capteur photosensible (14).

15. Module de surveillance (1...1") selon la revendication 14, **caractérisé en ce que** la commande (4) est prévue pour réduire la puissance de la source lumineuse (3) lorsque le capteur photosensible (14) enregistre une faible lumière environnante.

16. Module de surveillance (1...1") selon l'une quelconque des revendications précédentes, **caractérisé en ce que** la commande (4) comporte une entrée (13) pour un signal venant d'une source de courant pour l'arc électrique (C), et le démarrage du processus de prise de vue peut être réglé au moyen du signal.

17. Module de surveillance (1...1") selon la revendication 16, **caractérisé en ce que** la commande (4) est préparée de telle sorte qu'un processus de prise de vue est mis en oeuvre uniquement lorsque la source de courant pour l'arc électrique (C) signale un court-circuit sur le lieu de traitement ou une forte baisse du courant de traitement ou lorsque le capteur photosensible (14) enregistre une faible lumière environnante.

18. Module de surveillance (1...1") selon l'une quelconque des revendications 1 à 17 comportant un cache (9) pour au moins une ouverture du module de surveillance (1...1"), **caractérisé**
- **en ce que** le cache (9) est constitué d'une plaque frontale ronde avec une surface de fixation concentrique cylindrique, ladite surface de fixation cylindrique ayant un diamètre inférieur au diamètre de la plaque frontale, et
- **en ce que** dans la plaque frontale est intégrée une sortie d'air (7) ou au moins un dispositif de déviation, laquelle ou lequel sont prévus pour orienter le jet d'air sortant transversalement à l'axe optique (A) de la caméra (2) du module de surveillance (1...1").

19. Module de surveillance (1...1") selon la revendication 18, **caractérisé en ce que** ledit au moins un dispositif de déviation est disposé à l'extérieur sur une bague circulaire de la plaque frontale.

20. Module de surveillance (1...1") selon la revendication 18 ou 19, **caractérisé en ce qu'**au moins sur l'enveloppe extérieure de la surface de fixation cylindrique est disposé au moins un dispositif de fixation.

21. Brûleur pour la mise en oeuvre d'un processus de traitement à l'arc électrique (C), qui est protégé par un gaz protecteur sortant d'une buse à gaz (28), **caractérisé par** un module de surveillance (1...1") selon l'une quelconque des revendications 1 à 20, fixé sur le brûleur (26).

22. Brûleur (26) selon la revendication 21, **caractérisé en ce que**, au moment de la prise de vue, l'arc électrique (C) est masqué au moins partiellement par la buse à gaz (17) en raison de la fixation.
